# EUROPÄISCHE PATENTSCHRIFT

(11) **EP 1 475 277 B1**
(45) Veröffentlichungstag und Bekanntmachung des Hinweises auf die Patenterteilung: **20.07.2005**
(21) Anmeldenummer: 04010166.9
(22) Anmeldetag: 29.04.2004
(51) Int. Cl.: B60R 21/16, B21D 9/12

(54) **Gasführungsrohr aus Metall für Luftsäcke von Kraftwagen und Verfahren zu dessen Herstellung**
Metal gas guiding duct for a vehicle airbag and method of making the same
Tuyau métallique pour sac gonflable d'automobile et procédé pour sa fabrication

(30) Priorität: 05.05.2003 DE 10320106
(43) Veröffentlichungstag der Anmeldung: 10.11.2004
(73) Patentinhaber: Carl Froh GmbH, 59846 Sundern (DE)
(72) Erfinder: Cramer, Alfred, Dipl.-Ing., 59846 Sundern (DE)
(74) Vertreter: Patentanwälte Ostriga, Sonnet, Wirths & Roche

(56) Entgegenhaltungen:
- DE-C- 10 133 086
- DE-U- 20 216 611
- US-A- 4 580 324
- US-A- 4 761 866
- US-B1- 6 318 754

## Beschreibung

Die Erfindung betrifft zunächst ein Gasführungsrohr aus Metall für Luftsäcke von Kraftwagen entsprechend dem Oberbegriff des Anspruchs 1. Ein derartiges Gasführungsrohr ist durch offenkundige Vorbenutzung bekannt geworden. Es wird weiter auf die DE 10133086 C verwiesen.

Das bekannte Gasführungsrohr, eine sogenannte Gaslanze, dient der Einspeisung von Kopf-Luftsäcken (Kopf-Airbags). Dabei ist häufig ein Ende der Gaslanze verschlossen, während das andere Ende unmittelbar mit einer kreiszylindrischen muffenartigen Aufweitung auf den Anschlussstutzen eines Gasgenerators dichtend aufgesteckt ist. Um einen hinreichend dichten und vor allem einen gegen Axialverschiebung gesicherten Anschluss zu erhalten, weist der Anschlussstutzen des Generators eine nach außen offene Ringsicke auf, in welche, dazu korrelierend, eine nach innen vorstehende Ringsicke der kreiszylindrischen muffenartigen Aufweitung eingeprägt wird.

Die kreiszylindrische muffenartige Aufweitung ist Bestandteil eines 90°-Rohrbogens. Da das kraftfahrzeugseitige Einbaufeld nur wenig Raum bietet, ist es wichtig, den 90°-Rohrbogen so flach wie möglich zu halten, was wegen der damit einhergehenden engen Rohrkrümmungen eine große Anforderung an die Kaltverformungsarbeit stellt, welche zum einen die Biegeverformung des Rohrbogens und zum anderen die Herstellung der kreiszylindrischen muffenartigen Aufweitung umfasst. Die Kaltverformungsarbeit geht häufig mit einer Überbeanspruchung des kalt umzuformenden Metalls, eines geeigneten Stahls, einher, mit der nachteiligen Folge einer für derartige Gasführungsrohre besonders schädlichen Rissbildung am Rohraußenbogen und einer Faltenbildung am Rohrinnenbogen.

Das offenkundig vorbenutzte Gasführungsrohr weist einen Rohrbogen auf, dessen Rohrende zunächst um ca. 45° gebogen wird, und zwar mit einem Radius von 30 mm. Sodann wird die stirnseitige Schnittfläche erzeugt und das Rohrende in einem kombinierten Arbeitsgang aufgeweitet und mit demselben Radius von 30 mm zu einem 90°-Rohrbogen fertiggebogen. Um den Rohrbogen relativ flach zu halten, weist letzterer bei dem bekannten Gasführungsrohr zwei Biegebereiche auf, welche durch einen geraden Rohrbereich miteinander verbunden sind.

Ausgehend von dem bekannten offenkundig vorbenutzten Gasführungsrohr entsprechend der eingangs beschriebenen Gattung, liegt der Erfindung die Aufgabe zugrunde, das bekannte Gasführungsrohr so weiterzuentwickeln, dass es im Zuge der Kaltverformung problemloser als bisher, insbesondere ohne Fertigungsfehler also, herzustellen ist.

Entsprechend der Erfindung wird diese Aufgabe gemeinsam mit den Merkmalen des Oberbegriffs des Anspruchs 1 entsprechend dessen kennzeichnendem Teil dadurch gelöst, dass nur der rückseitige Endbereich der kreiszylindrischen muffenartigen Aufweitung aus einer angrenzenden vorderen Teillänge des biegeverformten Rohrbogenbereichs gebildet ist, während der sich an den rückseitigen Endbereich der muffenartigen Aufweitung anschließende vordere Bereich der muffenartigen Aufweitung aus einem biegeverformungsfreien Rohrbereich gebildet ist.

Entsprechend der Erfindung wird bei der Herstellung des Rohrbogens die Kaltverformungsarbeit unterteilt, und zwar zunächst in eine Biegeverformung etwa mit dem für den gewünschten Rohrbogen gesamten Umfangswinkelbetrag, wobei der hauptsächlich für die Herstellung der kreiszylindrischen muffenartigen Aufweitung vorgesehene vordere freie Endbereich des Rohrbogens nicht durch eine vorherige Biegeformung beansprucht wurde.

Während demnach im Bereich der Biegestrecke eine die weitere Kaltverformung zumindest behindernde Kaltverfestigung eingetreten ist, ist der hauptsächlich für die Herstellung der kreiszylindrischen Aufweitung vorgesehene vordere freie Endbereich des Rohres unverformt, d.h. nicht kaltverfestigt. Die anschließende Aufweitverformung zur Herstellung der kreiszylindrischen muffenartigen Aufweitung greift nur auf eine angrenzende vordere Teilstrecke des zuvor bereits biegeverformten übrigen Rohrbogenbereichs über, so dass diese Aufweitverformung, von einer Kaltverfestigung insgesamt kaum behindert, ohne Riss- und Faltenbildung und mit großer Fertigungsidentität erfolgen kann.

Als besonders günstige Form zur problemlosen Herstellung einer kreiszylindrischen muffenartigen Aufweitung hat es sich in weiterer Ausgestaltung der Erfindung als zweckmäßig herausgestellt, dass der Rohrbogen an der Rückseite der muffenartigen Aufweitung einen sich von der Rückseite weg in den übrigen Rohrbogenbereich hinein verjüngenden Übergangsbereich aufweist, welcher einen Kreiskegelstumpf bildet, dessen Mantellinie an der Außenseite des Rohrbogens wesentlich länger ist als die Mantellinie an der Innenseite des Rohrbogens.

Bei einem 90°-Rohrbogen kann dies dazu führen, dass der Kreiskegelstumpf an der Innenseite des Rohrbogens praktisch nicht mehr ausgebildet ist, so dass die Länge der Mantellinie an der Innenseite des Rohrbogens nahezu Null oder Null ist.

Entsprechend weiteren Erfindungsmerkmalen bildet der übrige Rohrbogenbereich, der sich beim offenkundig vorbenutzten Gasführungsrohr aus zwei Bogenbereichen und einem dazwischen angeordneten geraden Bogenbereich ungleichförmig zusammensetzt, über seine gesamte Länge eine gleichmäßige und stetige Krümmung.

Die Erfindung betrifft außerdem ein Verfahren zur Herstellung eines Gasführungsrohrs aus Metall für Luftsäcke von Kraftwagen, dessen mindestens eines Ende zumindest auf einem Teil seiner Länge zu einem bogenförmigen Rohrende biegeverformt wird und sodann ein dem bogenförmigen Rohrende zugeordneter freier Endbereich innerhalb eines Gesenks zu einer kreiszylindrischen muffenartigen Aufweitung verformt wird.

Entsprechend der Erfindung wird ein fertigungsgünstiges und produktsicheres Verfahren zur Herstellung eines gattungsgemäßen Gasführungsrohrs dadurch geschaffen, dass das bogenförmige Rohrende so in das Gesenk eingelegt wird, dass der ihm zugeordnete vordere freie Endbereich, der einen biegeverformungsfreien Rohrbereich bildet, außerhalb des Gesenks angeordnet ist, dass ein dornartiges Aufweitwerkzeug in den freien Endbereich eingeführt wird, und dass dabei der freie Endbereich bis auf einen außerhalb des Gesenks verbleibenden vorderen Restbereich in das Gesenk hineingeschoben und zunehmend an die Gesenkgravur angelegt wird, wobei der freie Endbereich gemeinsam mit einem rückseitig an ihn angrenzenden Teil des bogenförmigen Rohrendes rohrbogeninnenseitig hauptsächlich durch Biegeverformung und zugleich durch Aufweitverformung an die Innenseite der Gesenkgravur angelegt wird, und wobei der freie Endbereich gemeinsam mit einem rückseitig an ihn angrenzenden Teil des bogenförmigen Rohrendes rohrbogenaußenseitig hauptsächlich durch Aufweitverformung an die Außenseite der Gesenkgravur angelegt wird, wonach anschließend die endgültige Ausformung der kreiszylindrischen muffenartigen Aufweitung mittels eines Kalibrierdorns erfolgt.

Außerdem hat es sich für den Aufweitvorgang zur Herstellung der kreiszylindrischen muffenartigen Aufweitung insgesamt als günstig erwiesen, dass zur Herstellung eines 90°-Rohrbogens das bogenförmige Rohrende über einen Winkel von mehr als 90° gebogen wird. Als besonders zweckmäßig hat sich dabei ein Winkel von etwa 97° herausgestellt.

In den Zeichnungen sind ein bevorzugtes Ausführungsbeispiel entsprechend der Erfindung und das Verfahren zur Herstellung eines Gasführungsrohrs dargestellt, es zeigt
Fig. 1 den Endbereich einer Gaslanze mit angeformtem Rohrbogen im Längsschnitt entsprechend dem Stand der Technik,
Fig. 2 im Vergleich zu Fig. 1 (Stand der Technik) in Anlehnung an jene Darstellung einen Endbereich entsprechend der Erfindung,
Fig. 3-6 Längsschnitte entsprechend den verschiedenen Fertigungsstufen zur Herstellung eines Rohrendes mit kreiszylindrischer Aufweitung und
Fig. 7-9 Längsschnitte entsprechend dreier Fertigungsstufen unter Einbeziehung von Werkzeugen.

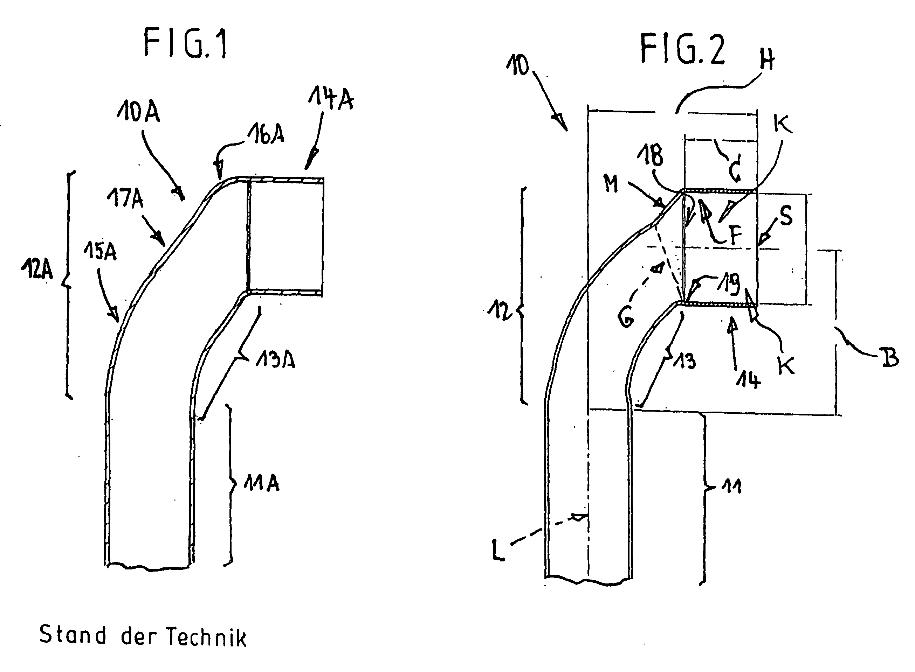

In Fig. 1 ist der Längsschnitt eines bekannten Gasführungsrohrs aus Metall dargestellt. Das bekannte Gasführungsrohr ist mit 10A bezeichnet. Von dem bekannten Gasführungsrohr 10A ist nur ein vorderer endseitiger Bereich dargestellt, während man sich den abgebrochenen Teil als den mit Füll- bzw. Kiemenöffnungen versehenen Gaslanzenbereich vorzustellen hat.

An einen im wesentlichen geraden abgebrochen dargestellten Rohrbereich 11A schließt sich vorn ein mit insgesamt 12A bezeichneter Rohrbogen an, welcher aus einem übrigen Rohrbogenbereich 13A und aus einer kreiszylindrischen muffenartigen Aufweitung 14A besteht. De muffenartige Aufweitung 14A ist auf einen nicht dargestellten Anschlussstutzen eines Gasgenerators aufgesteckt und mittels Sickenfügung gesichert.

Der übrige Rohrbogenbereich 13A besteht aus zwei Teilbogenbereichen 15A und 16A und aus einem die beiden Teilbogenbereiche 15A und 16A miteinander verbindenden geraden Bereich 17.

Fig. 2 stellt im Vergleich zu Fig. 1 (Stand der Technik) ein erfindungsgemäßes Gasführungsrohr 10 dar. An den geraden Rohrbereich 11 schließt sich vorn der insgesamt mit 12 bezeichnete Rohrbogen an.

Der Rohrbogen 12 besteht aus der kreiszylindrischen muffenartigen Aufweitung 14 und aus dem übrigen Rohrbogenbereich 13. Der übrige Rohrbogenbereich 13 stellt einen gleichmäßig und stetig gekrümmten Biegebereich dar. Aus den Darstellungen, insbesondere aus Fig. 2, ist zu erkennen, dass der Rohrbogenbereich 13 einen während des Biegevorganges entstandenen Biegeeinfallbereich darstellt.

Zwischen der Rückseite 18 der muffenartigen Aufweitung 14 und dem übrigen Rohrbereich 13 ist in Fig. 2 als Außenumfangslinie eine gestrichelt eingezeichnete Gerade G eingetragen. Es ist vorstellbar, dass im Bereich der Geraden G, der Rückseite 18 und einer rohrbogenaußenseitigen Mantellinie M ein Zwickelbereich vorhanden ist, der Teil der Oberfläche eines Kreiskegelstumpfes darstellt.

Zur Erzielung einer kompakten Bauform ist es wichtig, dass die Höhe H, d.h. der Abstand der Stirnfläche S der muffenartigen Aufweitung 14 von der Rohrachse L sowie schließlich auch das Maß B, welches die Weite des Rohrbogens 12 wiedergibt, nicht überschritten werden.

Auch ist es wichtig, dass die axiale Länge C der kreiszylindrischen muffenartigen Aufweitung 14 ein Mindestmaß aufweist, damit eine hinreichende Einstecklänge zur Aufnahme des in den Zeichnungen nicht dargestellten Anschlussstutzens eines Gasgenerators zur Verfügung steht.

Bei der Herstellung des Gasführungsrohrs 10 ist es wesentlich, dass im Bereich der Mantellinie M am Rohraußenbogen keine Risse sowie im Bereich der mit 19 bezeichneten Stelle des Rohrinnenbogens keine Falten entstehen.

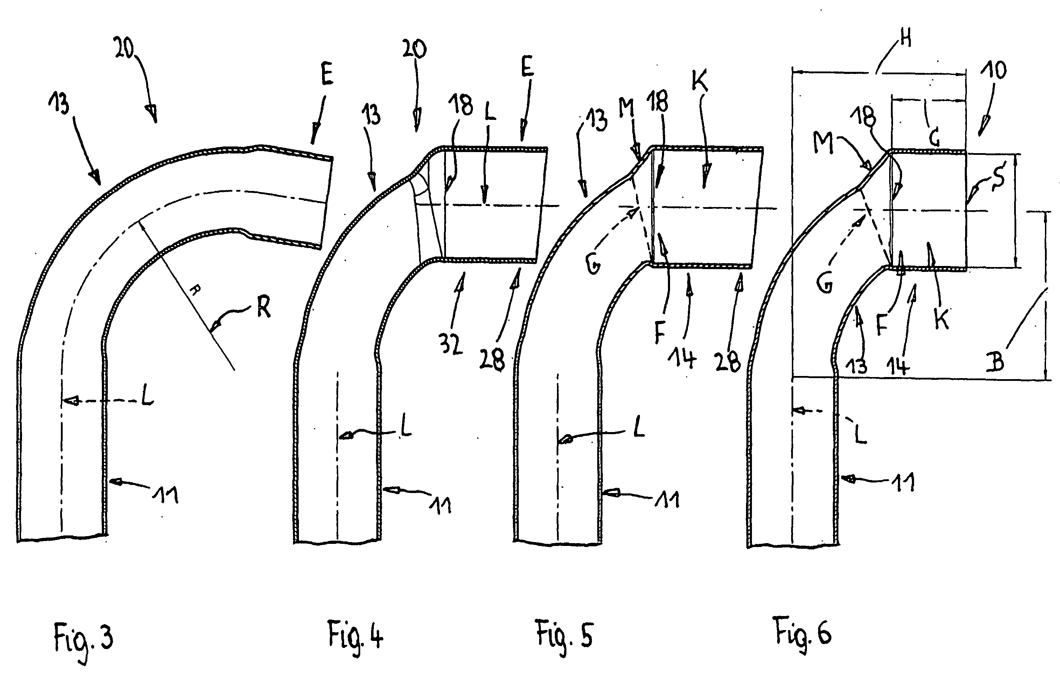

Im Zusammenhang der Fig. 3-9 soll nun das Verfahren zur Herstellung des Gasführungsrohrs 10 beschrieben werden:

Gemäß Fig. 3 wird mit Hilfe einer nicht dargestellten Biegevorrichtung ein bogenförmiges Rohrende 20 mit dem Radius R von z.B. 30 mm erzeugt, welches aus einem übrigen Rohrbogenbereich 13, der einen Biegeverformungsbereich mit einem entsprechend dargestellten Biegeeinfall zeigt, und aus einem unverformten, d.h. biegeverformungsfreien, vorderen freien Endbereich E, besteht.

Der biegeverformungsfreie vordere freie Endbereich E weist einen etwas größeren Durchmesser als der übrige Rohrbogenbereich 13 auf, welcher, bedingt durch die mit dem Biegevorgang verbundene Biege-Streck-Belastung, einen Biegeeinfall bzw. eine Durchmesserreduzierung erfahren hat. Die Biegeverformung erfolgt über einen Radius von etwa 30 mm und über einen Umfangswinkel von etwa 97°.

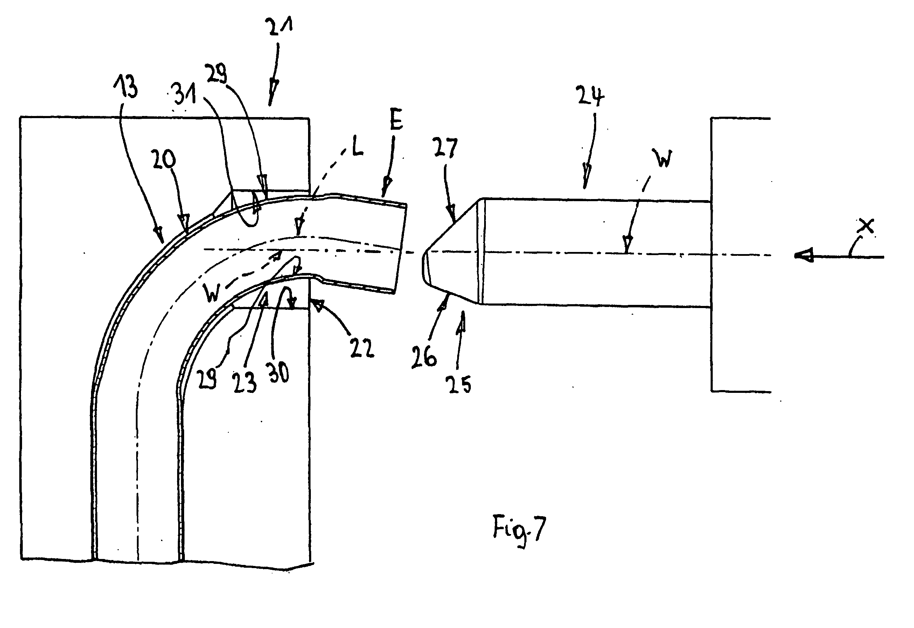

Gemäß Fig. 7 wird sodann das bogenförmige Rohrende 20 in ein Gesenk 21 eingelegt, und zwar derart, dass der vordere freie Endbereich E, der einen biegeverformungsfreien Rohrbereich bildet, außerhalb des Gesenks 21 angeordnet ist. An die Gesenköffnung 22 schließt sich nach hinten eine Erweiterung 23 an, welche nach vollendeter Umformung des aus kaltverformbarem Stahl bestehenden Rohrwerkstücks 20 die kreiszylindrische muffenartige Erweiterung 14 gemäß Fig. 2 abbildet.

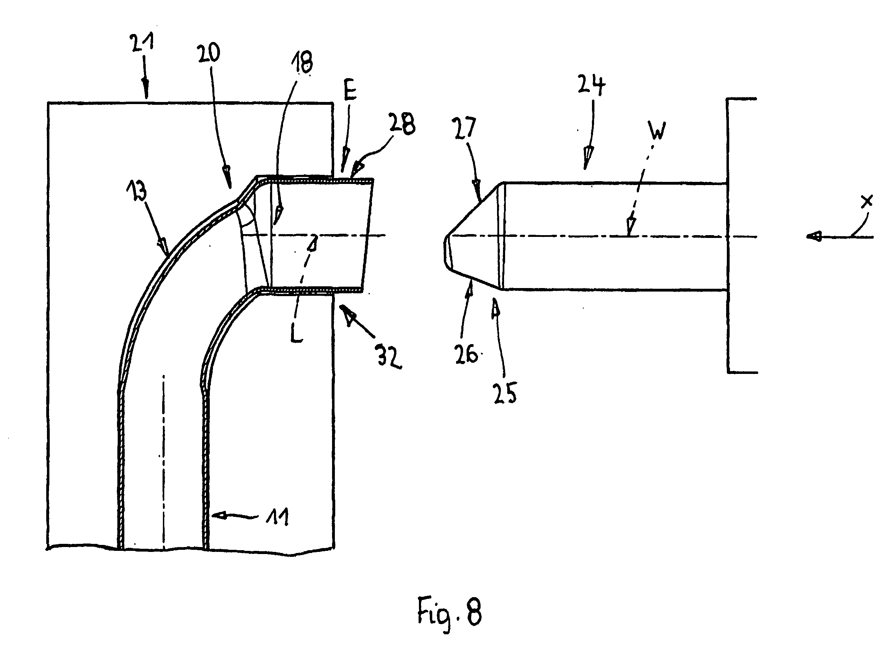

Aus Fig. 7 ist ein Innenwerkzeug, ein Aufweitdom 24, ersichtlich, dessen vorderer Bereich einen schiefen Kreiskegel 25 mit abgeflachter, abgerundeter Spitze aufweist, dessen untere Mantellinie 26 gemäß den Fig. 7 und 8 wesentlich kürzer ist als die obere Mantellinie 27.

Der Aufweitdorn 24 wird sodann in Zustellrichtung x in den offenen Endbereich E des bogenförmigen Rohrendes 20 hineingeschoben, d.h. hineingedrückt, und nach der Umformung wieder herausgezogen, wie Fig. 8 zeigt. Dabei bewegt sich der Dorn 24 vor und zurück auf einer Wirkungsgeraden W, welche gemäß Fig. 7 bezüglich der Gesenk-Erweiterung 23 unterhalb der Rohrachse L verläuft.

Im Übergang von der Fertigungsstufe gemäß Fig. 7 zur Fertigungsstufe gemäß 8 geschieht im einzelnen folgendes:

Der vordere freie Endbereich E wird bis auf seinen außerhalb des Gesenks 21 verbleibenden vorderen Restbereich 28 in das Gesenk 21 hineingeschoben und dabei zunehmend an die Gesenkgravur angelegt. Dabei wird der vordere freie Endbereich E gemeinsam mit einem rückseitig an ihn angrenzenden vorderen Bereich 29 des einen Biegeverformungsbereich bildenden übrigen Rohrbereichs 13 rohrbogeninnenseitig hauptsächlich durch Biegeverformung und zugleich durch Aufweitverformung zur Innenseite 30 der Gesenkgravur hinuntergedrückt und dort angelegt.

Zugleich wird der vordere freie Endbereich E gemeinsam mit dem rückseitig an ihn angrenzenden vorderen Bereich 29 des den Biegeverformungsbereich bildenden übrigen Rohrbereichs 13 rohrbogenaußenseitig hauptsächlich durch Aufweitverformung an die Außenseite 31 der Gesenkgravur angelegt.

Es entsteht so die in den Fig. 4 und 8 dargestellte Vorform 32 der kreiszylindrischen Aufweitung 14.

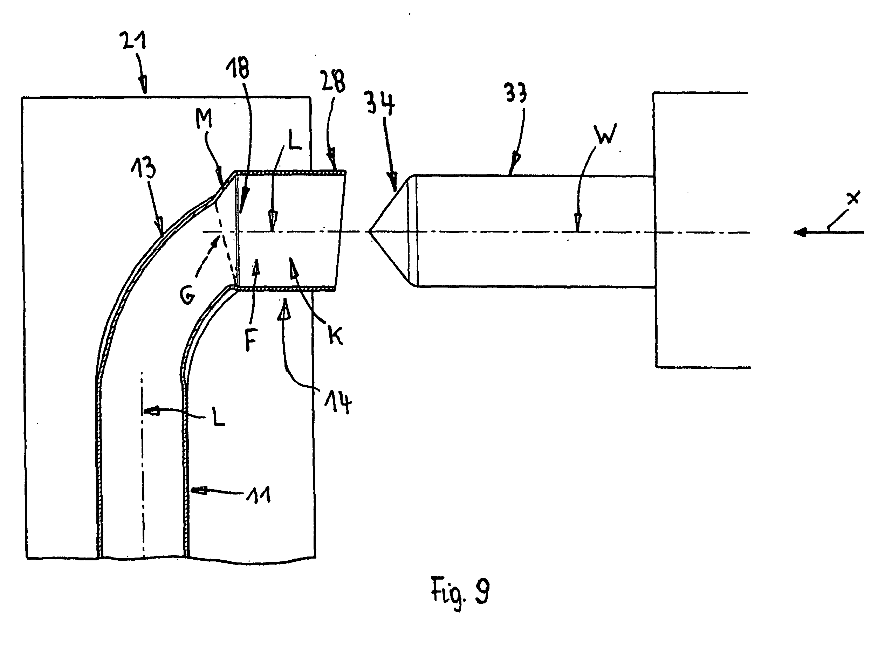

Die Vorform 32 wird durch einen Kalibrierdom 33, der mit einer geraden kreiskegelförmigen Spitze 34 versehen ist, zur endgültigen muffenartigen Aufweitung 14 ausgeformt, wie Fig. 9 (vgl. Fig. 5) zeigt.

Anhand der Fig. 2 und 6 ist vorstellbar, dass die kreiszylindrische muffenartige Aufweitung 14 einen rückseitigen Endbereich F aufweist, der aus einem vorderen Teilbereich des einen Biegeverformungsbereich darstellenden übrigen Rohrbogenbereichs 13 umgeformt wurde. Der vordere wesentliche Bereich K der muffenartigen Aufweitung 14 hingegen ist ein umgeformter Bestandteil des biegeverformungsfreien vorderen Endbereichs E.

Fig. 9 zeigt die Fertigungsstufe nach der Kalibrierung. Gemäß den Fig. 9 und 5 enthält die kreiszylindrische muffenartige Aufweitung 14 noch den Restbereich 28, welcher schließlich abgeschnitten wird, so dass die endgültige Form gemäß den Fig. 2 und 6 entsteht.

## Patentansprüche

1. Gasführungsrohr (10) aus Metall für Luftsäcke von Kraftwagen, welches an mindestens einem Ende einen Rohrbogen (12) aufweist, dessen vorderer freier Endbereich eine kreiszylindrische muffenartige Aufweitung (14) aufweist, die der Aufnahme eines mit der muffenartigen Aufweitung (14) zu verbindenden Anschlussstutzens, insbesondere eines Gasgenerators, dient, wobei der Rohrbogen (12) benachbart der Rückseite (18) der muffenartigen Aufweitung (14) einen biegeverformten Rohrbogenbereich (13) aufweist, **dadurch gekennzeichnet, dass** nur der rückseitige Endbereich (F) der kreiszylindrischen muffenartigen Aufweitung (14) aus einer angrenzenden vorderen Teillänge des biegeverformten Rohrbogenbereichs (13) gebildet ist, während der sich an den rückseitigen Endbereich (F) der muffenartigen Aufweitung (14) anschließende vordere Bereich (K) der muffenartigen Aufweitung (14) aus einem biegeverformungsfreien Rohrbereich (E) gebildet ist.

2. Gasführungsrohr nach Anspruch 1, **dadurch gekennzeichnet, dass** der Rohrbogen (12) an der Rückseite (18) der muffenartigen Aufweitung (14) einen sich von der Rückseite (18) weg in den übrigen Rohrbogenbereich (13) hinein verjüngenden Übergangsbereich aufweist, welcher einen Kreiskegelstumpf (G, M, 18) bildet, dessen Mantellinie (M) an der Außenseite des Rohrbogens (12) wesentlich länger ist als die Mantellinie an der Innenseite des Rohrbogens (12).

3. Gasführungsrohr nach Anspruch 1 oder nach Anspruch 2, **dadurch gekennzeichnet, dass** die Länge der Mantellinie an der Innenseite des Rohrbogens (12) nahezu Null oder Null ist.

4. Gasführungsrohr nach einem der Ansprüche 1 bis 3, **dadurch gekennzeichnet, dass** der übrige Rohrbogenbereich (13) über seine gesamte Länge gleichmäßig und stetig gekrümmt ist.

5. Verfahren zur Herstellung eines Gasführungsrohrs (10) aus Metall für Luftsäcke von Kraftwagen, dessen mindestens eines Ende zumindest auf einem Teil seiner Länge zu einem bogenförmigen Rohrende (20) biegeverformt wird und sodann ein dem bogenförmigen Rohrende (20) zugeordneter vorderer freier Endbereich (E) innerhalb eines Gesenks (21) zu einer kreiszylindrischen muffenartigen Aufweitung (14) verformt wird, **dadurch gekennzeichnet, dass** das bogenförmige Rohrende (20) so in das Gesenk (21) eingelegt wird, dass der ihm zugeordnete vordere freie Endbereich (E), der einen biegeverformungsfreien Rohrbereich bildet, außerhalb des Gesenks (21) angeordnet ist, dass ein dornartiges Aufweitwerkzeug (24) in den freien Endbereich (E) eingeführt wird, und dass dabei der freie Endbereich (E) bis auf einen außerhalb des Gesenks (21) verbleibenden vorderen Restbereich (28) in das Gesenk (21) hineingeschoben und zunehmend an die Gesenkgravur angelegt wird, wobei der freie Endbereich (E) gemeinsam mit einem rückseitig an ihn angrenzenden Teil (29) des bogenförmigen Rohrendes (20) rohrbogeninnenseitig hauptsächlich durch Biegeverformung und zugleich durch Aufweitverformung an die Innenseite (30) der Gesenkgravur angelegt wird, und wobei der freie Endbereich (E) gemeinsam mit einem rückseitig an ihn angrenzenden Teil (29) des bogenför migen Rohrendes (33) rohrbogenaußenseitig hauptsächlich durch Aufweitverformung an die Außenseite (31) der Gesenkgravur angelegt wird, wonach anschließend die endgültige Ausformung der kreiszylindrischen muffenartigen Aufweitung (14) mittels eines Kalibrierdorns (33) erfolgt.

6. Verfahren zur Herstellung eines Gasführungsrohrs nach Anspruch 5, **dadurch gekennzeichnet, dass** zur Herstellung eines 90°-Rohrbogens das bogenförmige Rohrende (20) über einen Winkel von mehr als 90° gebogen wird.

7. Verfahren nach Anspruch 6, **dadurch gekennzeichnet, dass** das bogenförmige Rohrende (20) über einen Winkel von etwa 97° gebogen wird.

## Claims

1. Metal gas-conducting pipe (10) for airbags in motor vehicles, which pipe has, at at least one end, a pipe bend (12) whose front free end region has a circular-cylindrical, sleeve-like flared portion (14) which serves to receive a pipe connection, particularly of a gas-generator, which is to be connected to said sleeve-like flared portion (14); wherein the pipe bend (12) has, adjacent to the rear side (18) of the sleeve-like flared portion (14), a region (13) of the pipe bend which has been subjected to bending-type deformation, **characterised in that** only the rear end region (F) of the circular-cylindrical, sleeve-like flared portion (14) is formed from an adjoining front partial length of that region (13) of the pipe bend which has been subjected to bending-type deformation, while that front region (K) of the sleeve-like flared portion (14) which adjoins the rear end region (F) of said sleeve-like flared portion (14) is formed from a region (E) of the pipe which is free from bending-type deformation.

2. Gas-conducting pipe according to claim 1, **characterised in that** the pipe bend (12) has, on the rear side (18) of the sleeve-like flared portion (14), a transitional region which tapers away from said rear side (18) and into the remaining region (13) of the pipe bend and which forms a truncated circular cone (G, M, 18) whose surface line (M) on the outside of the pipe bend (12) is substantially longer than the surface line on the inside of said pipe bend (12).

3. Gas-conducting pipe according to claim 1 or according to claim 2, **characterised in that** the length of the surface line on the inside of the pipe bend (12) is almost zero or is zero.

4. Gas-conducting pipe according to one of claims 1 to 3, **characterised in that** the remaining region (13) of the pipe bend is curved in a uniform and continuous manner over its entire length.

5. Method of manufacturing a metal gas-conducting pipe (10) for airbags in motor vehicles, of which pipe at least one end is subjected, at least over part of its length, to bending-type deformation to form a curved pipe end (20), and a front free end region (E) associated with said curved pipe end (20) is then deformed, inside a die (21), to form a circular-cylindrical, sleeve-like flared portion (14), **characterised in that** the curved pipe end (20) is placed in the die (21) in such a way that the front free end region (E) which is associated with said end and which forms a region of the pipe which is free from bending-type deformation, is disposed outside the die (21); that a mandrel-like flaring tool (24) is introduced into the free end region (E); and that, in the process, said free end region (E) is inserted in the die (21) as far as a front residual region (28) that remains outside the die (21), and said free end region is increasingly applied against the die sinking; wherein the free end region (E) is applied, together with a part (29), which adjoins it on the rear side, of the curved pipe end (20), against the inside (30) of the die sinking on the inside of the pipe bend mainly by bending-type deformation and, at the same time, by flaring-type deformation; and wherein the free end region (E) is applied, together with a part (29), which adjoins it on the rear side, of the curved pipe end (33), against the outside (31) of the die sinking on the outside of the pipe bend mainly by flaring-type deformation; after which the final forming-out of the circular-cylindrical, sleeve-like flared portion (14) then takes place by means of a sizing mandrel (33).

6. Method of manufacturing a gas-conducting pipe according to claim 5, **characterised in that** the curved pipe end (20) is bent over an angle of more than 90° for the purpose of manufacturing a 90° pipe bend.

7. Method according to claim 6, **characterised in that** the curved pipe end (20) is bent over an angle of about 97°.

## Revendications

1. Tube de guidage de gaz (10) en métal pour des sacs pneumatiques de véhicules automobiles, présentant, sur au moins une extrémité, un coude tubulaire (12), dont la zone d'extrémité libre avant présente un élargissement (14) du genre d'un manchon, cylindrique, à section circulaire, servant à recevoir une tubulure de raccordement à relier à l'élargissement (14) du genre d'un manchon, tubulure de raccordement en particulier d'un générateur à gaz, le coude tubulaire (12) présentant, au voisinage de la face arrière (18) de l'élargissement (14) du genre d'un manchon, une zone de coude tubulaire (13) déformée par cintrage, **caractérisé en ce que** seule la zone d'extrémité (F) arrière de l'élargissement (14) du genre d'un manchon, cylindrique, à section circulaire, est formée d'une longueur partielle avant, limitrophe, de la zone de coude tubulaire (13) déformée par cintrage, tandis que la zone avant (K) de l'élargissement (14) du genre d'un manchon, se raccordant à la zone d'extrémité (F) arrière de l'élargissement (14) du genre d'un manchon, est formée d'une zone tubulaire (E) exempte de déformation par cintrage.

2. Tube de guidage de gaz selon la revendication 1, **caractérisé en ce que** le coude tubulaire (12), en face arrière (18) de l'élargissement (14) du genre d'un manchon, présente une zone de transition partant de la face arrière (18) et s'effilant en allant donner la zone de coude tubulaire (13) restante, zone de transition formant un tronc de cône (G, M, 18) à section circulaire, dont la ligne d'enveloppe (M), sur la face extérieure du coude tubulaire (12), est notablement plus longue que la ligne d'enveloppe sur la face intérieure du coude tubulaire (12).

3. Tube de guidage de gaz selon la revendication 1 ou selon la revendication 2, **caractérisé en ce que** la longueur de la ligne d'enveloppe, en face intérieure du coude tubulaire (12), est à peu près de zéro ou est de zéro.

4. Tube de guidage de gaz selon l'une des revendications 1 à 3, **caractérisé en ce que** le reste de la zone de coude tubulaire (13) est incurvé régulièrement et de façon constante sur toute sa longueur.

5. Procédé de fabrication d'un tube de guidage de gaz (10) en métal pour des sacs pneumatiques de véhicules automobiles, dont au moins une extrémité est déformée par cintrage au moins sur une partie de sa longueur, pour produire une extrémité tubulaire (20) à forme cintrée, et, ensuite, une zone d'extrémité (E) avant libre, associée à l'extrémité de tube (20) à forme de coude, est déformée dans une matrice (21) pour produire un élargissement (14) du genre d'un manchon cylindrique à section circulaire, **caractérisé en ce que** l'extrémité de tube (20) à forme cintrée est introduite dans la matrice (21), de manière que la zone d'extrémité (E) avant libre lui étant associée, qui forme une zone tubulaire exempte de déformation par cintrage, soit disposée à l'extérieur de la matrice (21), **en ce qu'**un outil d'élargissement (24) du genre d'un mandrin est introduit dans la zone d'extrémité (E) libre, et **en ce que**, alors, la zone d'extrémité (E) libre est introduite dans la matrice (21) jusqu'à une zone résiduelle (28) avant restant hors de la matrice (21), et est appliquée de plus en plus fortement sur la gravure de la matrice, la zone d'extrémité (E) libre, conjointement avec une partie (29) la limitant en face arrière, de l'extrémité de tube (20) en forme de coude, étant appliquée côté intérieur du coude tubulaire, principalement par une déformation par cintrage et, en même temps, étant appliquée par une déformation par élargissement sur la face intérieure (30) de la gravure de matrice, et la zone d'extrémité (E) libre est appliquée sur la face extérieure (31) de la gravure de matrice, conjointement avec une partie (29), la délimitant en face arrière, de l'extrémité de tube (33) en forme de coude, du côté extérieur du coude tubulaire, principalement par une déformation d'élargissement, suite à quoi le façonnage ultime de l'élargissement (14) du genre d'un manchon, cylindrique, à section circulaire, est effectué à l'aide d'un mandrin de calibrage (33).

6. Procédé de fabrication d'un tube de guidage de gaz selon la revendication 5, **caractérisé en ce que**, pour fabriquer un coude tubulaire à 90°, l'extrémité de tube (20) à forme cintrée est façonnée en coude sur un angle supérieur à 90°.

7. Procédé selon la revendication 6, **caractérisé en ce que** l'extrémité de tube (20) en forme de coude est façonnée en coude sur un angle d'environ 97°.
